# EUROPEAN PATENT APPLICATION

(11) **EP 4 775 635 A1**
(43) Date of publication of application: **15.07.2026**
(21) Application number: 24862847.1
(22) Date of filing: 05.09.2024
(51) Int. Cl.: C08L 83/06, C08K 3/013, C08K 3/08, C08L 83/05, C08L 83/07

(54) **THERMALLY CONDUCTIVE SILICONE COMPOSITION**

(30) Priority: 08.09.2023 JP 2023145754
(71) Applicant: SHIN-ETSU CHEMICAL CO., LTD., Tokyo 100-0005 (JP)
(72) Inventor: TSUJI, Kenichi, Annaka-shi, Gunma 379-0224 (JP)
(74) Representative: Angerhausen, Christoph
(86) International application number: PCT/JP2024/031804
(87) International publication number: WO 2025/053195

(57) **Abstract**

Provided is a thermally conductive silicone composition having low thermal resistance and excellent reliability. The thermally conductive silicone composition contains the following components (A), (B), (C), (D), (E), and (F): (A) an organopolysiloxane having at least two alkenyl groups at ends of the molecular chain and having a kinematic viscosity at 25°C of 100 to 500,000 mm²/s; (B) a hydrolyzable methylpolysiloxane having three functional groups at one end and represented by the following general formula (1), 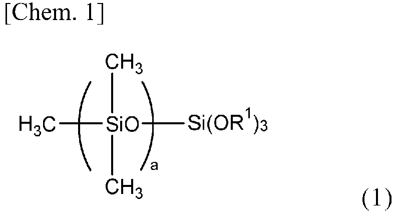 wherein, in the formula (1), R¹ is an alkyl group having 1 to 6 carbon atoms, and a is a number of from 5 to 100); (C) a bismuth tin-based alloy powder having a melting point of 220°C or lower; (D) a heat conductive filler different from the component (C) and having a melting point of 280°C or higher and an average particle diameter of 3 µm or more; (E) an organohydrogenpolysiloxane having at least two hydrogen atoms bonded directly to silicon atoms (Si-H groups) per molecule; and (F) a catalyst selected from platinum and platinum compounds.

## Description

### Technical Field

The present invention relates to a thermally conductive silicone composition having high heat dissipation performance and excellent reliability.

### Background Art

It is widely known that electronic components such as LSI and IC chips generate heat during use, which in turn degrades their performance. Various heat dissipation techniques have been used as means for solving the problem. For example, in one known technique, a cooling member such as a heat sink is disposed near a heat-generating portion so as to be in close contact with each other. This can facilitate efficient heat transfer to the cooling member to cool the cooling member, and the heat in the heat generating portion is thereby dissipated efficiently. In this case, if a gap is present between the heat generating portion and the cooling member, air with low thermal conductivity in the gap reduces the efficiency of heat transfer, so that the temperature of the heat generating portion is not reduced sufficiently. For the purpose of preventing air from entering the gap between the heat generating portion and the cooling member to prevent the above phenomenon, heat dissipation materials, heat dissipation sheets, and heat dissipation greases that have high thermal conductivity and are capable of conforming to the surface of the cooling member are used (JP-B-2938428, JP-B-2938429, and JP-B-3952184: Patent documents 1 to 3). In particular, heat dissipation greases can be applied as thin coatings in products and therefore exhibit high performance in terms of thermal resistance.

Some types of heat dissipation greases are designed to be applied between members and then heat-cured for use. Many materials containing a large amount of a solid filler have been designed for the purpose of increasing the thermal conductivity and improving the heat dissipation performance. However, to reduce the contact thermal resistance between the heat generating portion and the cooling member, it is preferable that a heat conductive filler is in contact with them while its flowability is maintained. From this point of view, various heat dissipation greases containing low-melting point metals have been reported (JP-A-2021-169582, JP-B-4551074, and JP-B-4860229: Patent documents 4 to 6).

However, since these are gallium or alloys containing gallium, it is feared that corrosion of the metal member may occur if the gallium is exposed due to stress during the operation of the device. Moreover, since gallium is a rare metal, the price of the grease is high. JP-A-2014-003152 (Patent document 7) proposes a thermal interface material containing a heat conductive filler formed of a bismuth tin alloy. However, the mixing ratio of the filler is insufficient, and a reduction in the thermal resistance is not considered sufficient. Since the particle diameter of the filler added so as to serve as a spacer is small, the BLT (the thickness of the material) decreases after a heat cycle test. In this case, the material cannot follow the warpage of the base, and the thermal resistance may deteriorate due to delamination from the base.

### Prior Art Documents

### Patent documents

Patent document 1: JP-B-2938428
Patent document 2: JP-B-2938429
Patent document 3: JP-B-3952184
Patent document 4: JP-A-2021-169582
Patent document 5: JP-B-4551074
Patent document 6: JP-B-4860229
Patent document 7: JP-A-2014-003152

### Summary of Invention

### Technical Problem

It is therefore an object of the invention to provide a thermally conductive silicone composition that provides a cured product having low thermal resistance and excellent reliability.

### Solution to Problem

The inventors have conducted extensive studies in order to achieve the foregoing object and found that the thermally conductive silicone composition as set forth below can attain the foregoing object, and thus the invention has been completed.

Accordingly, the present invention provides the following thermally conductive silicone composition etc.
<1> A thermally conductive silicone composition comprising the components (A), (B), (C), (D), (E), and (F) of:
   (A) 100 parts by mass of an organopolysiloxane having at least two alkenyl groups per molecule and having a kinematic viscosity at 25°C of 100 to 500,000 mm²/s;
   (B) 50 to 500 parts by mass, based on 100 parts by mass of the component (A), of a hydrolyzable methylpolysiloxane having three functional groups at one end represented by general formula (1) defined as: 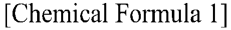 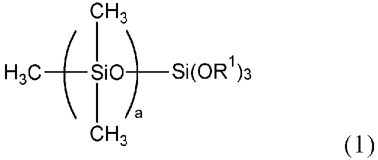 wherein, in the formula (1), R¹ is an alkyl group having 1 to 6 carbon atoms, and a is a number of 5 to 100;
   (C) 1000 to 3000 parts by mass, based on the total of 100 parts by mass of the components (A) and (B), of a bismuth tin-based alloy powder having a melting point of 220°C or lower;
   (D) 200 to 1500 parts by mass, based on the total of 100 parts by mass of the components (A) and (B), of a heat conductive filler different from the component (C) and having a melting point of 280°C or higher and an average particle diameter of 3 µm or more,
      wherein the total amount of the components (C) and (D) is 2300 to 3500 parts by mass based on the total of 100 parts by mass of the components (A) and (B);
   (E) an organohydrogenpolysiloxane having at least two hydrogen atoms bonded directly to silicon atoms (Si-H groups) per molecule, the organohydrogenpolysiloxane being contained therein in such an amount that {the number of Si-H groups in the component (E)} / {the number of alkenyl groups in the component (A)} is 0.1 to 5.0; and
   (F) a catalyst selected from platinum and platinum compounds in an amount corresponding to 0.1 to 500 ppm of platinum atom based on the mass of the component (A).
<2> The thermally conductive silicone composition according to <1>, further comprising:
   (G) 0.1 to 5% by mass, based on the mass of the component (A), of one or two or more compounds selected from the group consisting of acetylene compounds, nitrogen compounds, organophosphorus compounds, oxime compounds, and organochloro compounds.

### Advantageous Effects of Invention

The thermally conductive silicone composition of the invention contains the bismuth-tin alloy and the filler different from the bismuth-tin alloy and having a specific average particle diameter to thereby enable provision of a cured product having low thermal resistance and excellent reliabilit. Therefore, the thermally conductive silicone composition of the invention is useful as a heat dissipation material for electronic components.

### Description of Embodiments

The present invention will next be described in detail.

### Component (A)

The component (A) used in the composition of the invention is an organopolysiloxane that has at least two alkenyl groups bonded directly to silicon atoms per molecule and may be linear or branched. The component (A) may be a mixture of two or more organopolysiloxanes having different viscosities. Preferably, one or more silicon atom-bonded alkenyl groups are present at each of the two ends of the molecular chain.

Examples of the alkenyl group include a vinyl group, an allyl group, a 1-butenyl group, and a 1-hexenyl group. The alkenyl group is preferably a vinyl group in terms of ease of synthesis and cost.

Examples of an organic group bonded to a silicon atom and different from the alkenyl groups include: alkyl groups such as a methyl group, an ethyl group, a propyl group, a butyl group, a hexyl group, and a dodecyl group; aryl groups such as a phenyl group; and aralkyl groups such as a 2-phenylethyl group and a 2-phenylpropyl group. Other examples include substituted hydrocarbon groups such as a chloromethyl group and a 3,3,3-trifluoropropyl group. Of these, a methyl group is preferred in terms of ease of synthesis and cost.

Preferably, each of the alkenyl groups bonded directly to silicon atoms is present at an end of the molecular chain of the organopolysiloxane.

The kinematic viscosity of the organopolysiloxane used as the component (A) at 25°C is in the range of 100 to 500,000 mm²/s and preferably in the range of 400 to 100,000 mm²/s. The kinematic viscosity of the organopolysiloxane is a value measured at 25°C using an Ostwald viscometer.

The content of the component (A) in the thermally conductive silicone composition of the invention is preferably 0.1 to 8.0% by mass, preferably 0.1 to 6.0% by mass, and still more preferably 0.1 to 5.0% by mass.

One type of the component (A) may be used alone, or two or more types thereof may be used in combination.

### Component (B)

The component (B) used in the composition of the invention is a hydrolyzable methylpolysiloxane having three functional groups at one end, which is represented by general formula (1) defined as: 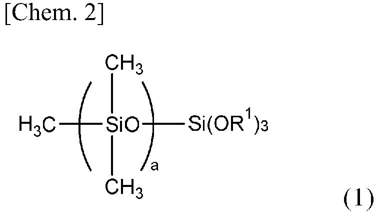 wherein, in the formula (1), R¹ is an alkyl group having 1 to 6 carbon atoms, and a is a number of from 5 to 100.

In the above formula (1), R¹ is an alkyl group having 1 to 6 carbon atoms and is preferably a methyl group, an ethyl group, or a propyl group and particularly preferably a methyl group or an ethyl group.

In the formula (1), a is in the range of 5 to 100 and is preferably in the range of 10 to 60. If a is smaller than 5, severe oil bleeding from the composition may occur, causing a reduction in reliability. If a is more than 100, the wettability may become insufficient.

The amount of the component (B) added is in the range of 50 to 500 parts by mass and preferably in the range of 100 to 500 parts by mass based on 100 parts by mass of the component (A). If the amount of the component (B) added is less than 50 parts by mass, sufficient wettability may not be obtained. If the amount of the component (B) added is more than 500 parts by mass, severe oil bleeding may occur, causing a reduction in reliability.

One type of the component (B) may be used alone, or two or more types thereof may be used in combination.

### Component (C)

The component (C) used in the composition of the invention is a bismuth tin-based alloy powder having a melting point of 220°C or lower. The melting point of the component (C) is 220°C or lower, preferably 200°C or lower, more preferably 190°C or lower, and particularly preferably 180°C or lower. If the melting point is higher than 220°C, the alloy may not melt sufficiently in a general heating step, and low thermal resistance may not be obtained.

The average particle diameter of the component (C) is preferably in the range of 0.1 to 80 µm, more preferably in the range of 0.1 to 70 µm, and particularly preferably in the range of 0.1 to 60 µm. If the average particle diameter is less than 0.1 µm, the spreadability of the composition may be low. If the average particle diameter is more than 80 µm, achieving low thermal resistance may be difficult.

The term "average particle diameter" as used herein refers to a volume-based average diameter which can be measured using the Microtrac MT3300EX manufactured by NIKKISO Co., Ltd. and (the same applies throughout the following).

The component (C) may have any shape such as an indefinite shape or a spherical shape.

The amount of the component (C) added is in the range of 1000 to 3000 parts by mass, preferably 1000 to 2700 parts by mass, and more preferably in the range of 1200 to 2700 parts by mass based on a total of 100 parts by mass of the components (A) and (B). If the amount added is less than 1000 parts by mass, the base cannot be bonded sufficiently by heating, and low thermal resistance may not be obtained. If the amount added is more than 3000 parts by mass, the spreadability of the composition may be low.

One type of the component (C) may be used alone, or two or more types thereof may be used in combination.

### Component (D)

The component (D) used in the composition of the invention is a heat conductive filler different from the component (C) and having a melting point of 280°C or higher and an average particle diameter of 3 µm or more.

Preferably, the component (D) has a thermal conductivity of 10 W/m°C or more. If the thermal conductivity is less than 10W/m°C, the thermal conductivity itself of the thermally conductive silicone composition may be low.

Examples of the component (D) include aluminum powder, copper powder, silver powder, iron powder, nickel powder, gold powder, metallic silicon powder, aluminum nitride powder, boron nitride powder, alumina powder, diamond powder, carbon powder, zinc oxide powder, and aluminum hydroxide powder. Any filler can be used so long as it has a thermal conductivity of 10 W/m°C or more. One filler or a mixture of two or more fillers may be used.

The melting point of the component (D) is 280°C or higher and preferably 300°C or higher. If the melting point is lower than 280°C, the heat conductive filler used as the component (D) melts when it is exposed to heat at 260°C, which corresponds to a general lead solder reflow condition. This causes the composition to lose its thickness and may deteriorate the reliability.

The average particle diameter of the component (D) is 3 µm or more, preferably in the range of 3 to 100 µm, more preferably in the range of 3 to 80 µm, and particularly preferably in the range of 3 to 70 µm. If the average particle diameter is less than 3 µm, the composition cannot maintain a sufficient thickness when the component (C) is heat-melted, and the reliability after a heat cycle test may deteriorate. If the average particle diameter is larger than 100 µm, the thermal resistance of the composition is excessively high, and its performance may deteriorate.

The component (D) has any shape such as an indefinite shape or a spherical shape.

The amount of the component (D) added is in the range of 200 to 1,500 parts by mass, preferably 200 to 1,200 parts by mass, and more preferably in the range of 250 to 1,200 parts by mass based on a total of 100 parts by mass of the components (A) and (B). If the amount of the component (D) added is less than 200 parts by mass, the thermal conductivity of the composition may be low. If the amount is more than 1,500 parts by mass, the melting of the component (C) may be inhibited.

One type of the component (D) may be used alone, or two or more types thereof may be used in combination.

The total amount of the components (C) and (D) added is in the range of 2,300 to 3,500 parts by mass, preferably in the range of 2,300 to 3,300 parts by mass, and more preferably in the range of 2,300 to 3,200 parts by mass based on a total of 100 parts by mass of the components (A) and (B). If the amount added is less than 2,300 parts by mass, the thermal conductivity of the composition may be low. If the amount added is more than 3,500 parts by mass, the spreadability of the composition may deteriorate.

### Component (E)

The component (E) used in the composition of the invention is an organohydrogenpolysiloxane having at least two hydrogen atoms bonded directly to silicon atoms (Si-H groups) per molecule.

Examples of an organic group bonded to a silicon atom and different from the Si-H groups include: alkyl groups such as a methyl group, an ethyl group, a propyl group, a butyl group, a hexyl group, and a dodecyl group; aryl groups such as a phenyl group; aralkyl groups such as a 2-phenylethyl group and a 2-phenylpropyl group; substituted hydrocarbon groups such as a chloromethyl group and a 3,3,3-trifluoropropyl group; and epoxy ring-containing organic groups such as a 2-glycidoxyethyl group, a 3-glycidoxypropyl group, and a 4-glycidoxybutyl group. The organohydrogenpolysiloxane used as the component (E) may be linear, branched, or cyclic, and the component (E) may be a mixture of organohydrogenpolysiloxanes.

The amount of the component (E) added is evaluated as {the number of Si-H groups in the component (E)} / {the number of alkenyl groups in the components (A) and (B)}, and this ratio is in the range of 0.1 to 5.0, preferably 0.5 to 4.5, and more preferably in the range of 0.5 to 2.5. The amount of the component (E) added is determined based on the fact that if the ratio {the number of Si-H groups in the component (E)} / {the number of alkenyl groups in the components (A) and (B)} is less than 0.1, the composition cannot be formed into a network structure sufficiently, and the grease may not be cured sufficiently, while that if the ratio is more than 5.0, the crosslink density may be excessively high, and the reliability may deteriorate.

One type of the component (E) may be used alone, or two or more types thereof may be used in combination.

### Component (F)

The component (F) used in the composition of the invention is a catalyst selected from platinum and platinum compounds and facilitates the addition reaction between the alkenyl groups in the components (A) and (B) and the Si-H groups in the component (E).

Examples of the component (F) include elemental platinum, chloroplatinic acid, platinum-olefin complexes, platinum-alcohol complexes, and platinum coordination compounds.

The amount of the component (F) is in the range of 0.1 to 500 ppm and preferably in the range of 0.1 to 400 ppm in terms of platinum atoms based on the mass of the component (A). If the amount of the component (F) is less than 0.1 ppm in terms of platinum atoms, the effects of the catalyst are not obtained. Even if the amount is more than 500 ppm, the effects do not increase, and this amount is economically disadvantageous.

One type of the component (F) may be used alone, or two or more types thereof may be used in combination.

### Component (G)

Component (G) used in the composition of the invention is an optionally-used control agent for inhibiting the catalytic activity of the component (F) and inhibits the progress of the hydrosilylation reaction at room temperature to extend the shell life and pot life. A well-known reaction control agent may be used, and examples thereof include acetylene compounds, nitrogen compounds, organophosphorus compounds, oxime compounds, and organochloro compounds.

The amount of the component (G) added is preferably in the range of 0.1 to 5% by mass and more preferably in the range of 0.1 to 4% by mass based on the mass of the component (A). If the amount of the component (G) added is less than 0.1%, the effect of extending the shell life and pot life is not obtained sufficiently. If the amount is more than 5%, the curing rate may decrease.

One type of the component (G) may be used alone, or two or more types thereof may be used in combination.

To improve the dispersibility of the component (G) in the thermally conductive silicone composition, the component (G) may be diluted with, for example, toluene.

### Additional components

In addition to the component (A) to (G), an antioxidant and other components may be optionally added to the composition of the invention in order to prevent deterioration.

### Production method

The composition of the invention can be produced by mixing prescribed amounts of the components (A) to (F) and the optional component (G) and/or additional components using a mixer such as the Trimix, Twinmix, and Planetary Mixer (these are all registered trademarks of mixers manufactured by INOUE MFG., INC.), the Ultramixer (a registered trademark of a mixer manufactured by MIZUHO INDUSTRIAL CO., LTD), and the HIVIS MIX (a registered trademark of a mixer manufactured by PRIMIX Corporation).

### Examples

The invention will be described in detail by way of working examples and comparative examples for the purpose of further clarifying the effects of the invention. However, the invention is not limited thereto.

Tests for evaluating the effects of the invention were performed as follows.

### [Viscosity]

The absolute viscosity of a composition was measured at 25°C using a Malcom viscometer (type PC-10).

### [BLT (material thickness) and thermal resistance]

A thermally conductive silicone composition was placed between a 15 mm × 15 mm × 1 mmt Si chip and a 15 mm × 15 mm × 1 mmt Ni plate. While a pressure of 0.18 (MPa) was applied, the resulting chip and plate were placed in an oven at 170°C for 90 minutes to heat-cure the thermally conductive silicone composition, and a test piece for thermal resistance measurement was thereby produced. Then the initial BLT and thermal resistance were measured.

Then a heat cycle test (HC test) was performed. Specifically, the test piece was left to stand at -40°C for 30 minutes and then at 125°C for 30 minutes, and this cycle was repeated 1000 times. Then the BLT and thermal resistance after the test were measured.

The BLT was calculated by measuring the thicknesses of the Si chip and the Ni plate using a micro gauge in advance and subtracting the measured thicknesses from the overall thickness of the test piece. The thermal resistance was measured using the Nanoflash (LFA467 manufactured by NETZSCH).

The following components forming the composition of the invention were prepared.

### Component (A)

A-1: Dimethylpolysiloxane capped with dimethylvinylsilyl groups at both ends and having a kinematic viscosity at 25°C of 600 mm²/s (vinyl value: 0.015 mol/100 g)
A-2: Dimethylpolysiloxane capped with dimethylvinylsilyl groups at both ends and having a kinematic viscosity at 25°C of 30,000 mm²/s (vinyl value: 0.0036 mol/100 g)
A-3: Dimethylpolysiloxane capped with trivinylsilyl groups at both ends and having a kinematic viscosity at 25°C of 1,500 mm²/s (vinyl value: 0.026 mol/100 g)

### Component (B)

B-1: ((CH₃)₃SiO_{1/2})((CH₃)₂SiO)₃₀((OCH₃)₃SiO_{1/2})
B-2: ((CH₃)₃SiO_{1/2})((CH₃)₂SiO)₂₀((OCH₃)₃SiO_{1/2})

### Component (C)

C-1: Bi₅₇Sn₄₃ powder melting point: 144°C, average particle diameter: 19 µm
C-2: Bi₄₀Sn₆₀ powder melting point: 142°C, average particle diameter: 25 µm

### Component (D)

d-1: Aluminum powder with an average particle diameter of 10 µm
d-2: Aluminum powder with an average particle diameter of 2 µm
d-3: Copper powder with an average particle diameter of 10 µm
d-4: Copper powder with an average particle diameter of 2 µm
d-5: Zinc oxide powder with an average particle diameter of 0.6 µm

The above-listed d-1 to d-5 were mixed in parts by mass shown in Table 1 below to thereby obtain D-1 to D-5. The results of the measurement of the average particle diameters of D-1 to D-5 are also shown. The average particle diameter is a value measured as a volume-based average diameter using the Microtrac MT3300EX manufactured by NIKKISO Co., Ltd.

**[Table 1]**

| | D-1 | D-2 | D-3 | D-4 | D-5 (Comparative example) |
|---|---|---|---|---|---|
| d-1 | 780 | 783 | 773 | 0 | 0 |
| d-2 | 684 | 560 | 397 | 0 | 1101 |
| d-3 | 0 | 0 | 0 | 3293 | 0 |
| d-4 | 0 | 0 | 0 | 991 | 0 |
| d-5 | 471 | 378 | 442 | 510 | 800 |
| Average particle diameter (µm) | 3.3 | 4.6 | 4.2 | 3.8 | 0.8 |

### Component (E)

E-1: Organohydrogenpolysiloxane represented by the following formula.

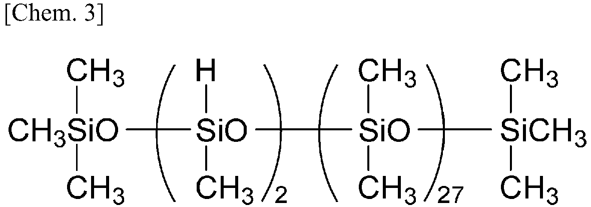

### Si-H content: 0.088 mol/100 g

E-2: Organohydrogenpolysiloxane represented by the following formula.

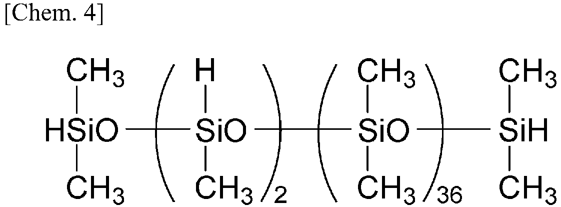

### Si-H content: 0.137 mol/100 g

E-3: Organohydrogenpolysiloxane represented by the following formula.

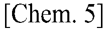

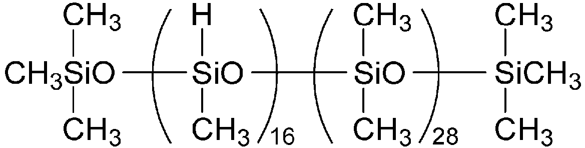

### Si-H content: 0.500 mol/100 g

### Component (F)

F-1: Solution of platinum-divinyltetramethyldisiloxane complex in A-1: platinum atom content: 1 wt%

### Component (G)

### G-1: 1-Ethynyl-1-cyclohexanol

### Working Examples 1 to 8 and Comparative Examples 1 to 6

The components (A) to (G) were mixed in the manner described below to obtain working examples 1 to 8 and comparative examples 1 to 6.

Specifically, the component (A) was placed in the 1 L HIVIS MIX (manufactured by PRIMIX Corporation). Then the components (B), (C), and (D) were added in amounts shown in Table 2 or 3, and the mixture was stirred for 1 hour. Next, the components (E), (F), and (G) were added in amounts shown in Table 2 or 3, and the mixture was stirred until uniform.

**[Table 2]**

| Unit: parts by mass | | | | | | | | |
|---|---|---|---|---|---|---|---|---|
| | Working example | | | | | | | |
| | 1 | 2 | 3 | 4 | 5 | 6 | 7 | 8 |
| A-1 | 100 | 0 | 80 | 0 | 0 | 0 | 100 | 100 |
| A-2 | 0 | 35 | 0 | 35 | 35 | 35 | 0 | 0 |
| A-3 | 0 | 65 | 20 | 65 | 65 | 65 | 0 | 0 |
| B-1 | 259 | 466 | 450 | 466 | 467 | 467 | 317 | 0 |
| B-2 | | | | | | | | 259 |
| C-1 | 6404 | 13588 | 14708 | 0 | 0 | 0 | 7204 | 6404 |
| C-2 | 0 | 0 | 0 | 12936 | 14230 | 10991 | 0 | 0 |
| Component (C) / total of components (A) and (B) | 17.84 | 24.01 | 26.74 | 22.86 | 25.09 | 19.38 | 17.28 | 17.84 |
| D-1 | 1935 | 1621 | 0 | 0 | 0 | 0 | 0 | 1935 |
| D-2 | 0 | 0 | 1582 | 1678 | 0 | 0 | 0 | 0 |
| D-3 | 0 | 0 | 0 | 0 | 1659 | 2167 | 0 | 0 |
| D-4 | 0 | 0 | 0 | 0 | 0 | 0 | 4794 | 0 |
| D-5 (comparative example) | 0 | 0 | 0 | 0 | 0 | 0 | 0 | 0 |
| Component (D) / total of components (A) and (B) | 5.39 | 2.86 | 2.88 | 2.96 | 2.93 | 3.82 | 11.50 | 5.39 |
| Total of components (C) and (D) / total of components (A) and (B) | 23.23 | 26.87 | 29.62 | 25.82 | 28.02 | 23.21 | 28.77 | 23.23 |
| E-1 | 2.48 | 2.79 | 0 | 2.79 | 2.79 | 0 | 3.54 | 2.48 |
| E-2 | 6.08 | 6.84 | 6.84 | 6.84 | 6.84 | 5.33 | 8.70 | 6.08 |
| E-3 | 0 | 0 | 5.10 | 0 | 0 | 2.18 | 0 | 0 |
| (Si-H in component (E)) / (alkenyl groups in component (A) (Si-Vi)) (number ratio) | 0.7 | 0.6 | 2.0 | 0.6 | 0.6 | 1.0 | 1.0 | 0.7 |
| F-1 | 0.46 | 0.52 | 0.52 | 0.52 | 0.52 | 1.04 | 0.52 | 0.46 |
| Amount of platinum atoms (ppm) relative to component (A) | 46 | 52 | 52 | 52 | 52 | 104 | 52 | 46 |
| G-1 | 0.21 | 0.23 | 0.23 | 0.23 | 0.23 | 0.23 | 0.23 | 0.21 |
| Viscosity (Pa·s) | 252 | 50 | 78 | 44 | 107 | 151 | 128 | 182 |
| BLT (µm) | 33 | 24 | 23 | 23 | 25 | 22 | 23 | 32 |
| Thermal resistance (mm²·K/W) | 6.2 | 4.6 | 5.1 | 2.8 | 3.8 | 3.1 | 5.1 | 6.0 |
| BLT (µm) after HC test | 32 | 22 | 21 | 21 | 24 | 21 | 22 | 34 |
| Thermal resistance (mm²·K/W) after HC test | 6.0 | 4.2 | 4.6 | 2.8 | 3.7 | 3.0 | 4.9 | 6.3 |

**[Table 3]**

| Unit: parts by mass | | | | | | |
|---|---|---|---|---|---|---|
| | Comparative example | | | | | |
| | 1 | 2 | 3 | 4 | 5 | 6 |
| A-1 | 100 | 100 | 80 | 100 | 100 | 100 |
| A-2 | 0 | 0 | 20 | 0 | 0 | 0 |
| A-3 | 0 | 0 | 0 | 0 | 0 | 0 |
| B-1 | 468 | 366 | 300 | 468 | 468 | 500 |
| C-1 | 5500 | 7641 | 6033 | | 13588 | 14440 |
| C-2 | 0 | 0 | 0 | 5545 | 0 | 0 |
| Component (C) / total of components (A) and (B) | 9.68 | 16.39 | 15.08 | 9.76 | 23.92 | 24.07 |
| D-1 | 7805 | 0 | 0 | 0 | 0 | 0 |
| D-2 | 0 | 0 | 2617 | 0 | 0 | 6782 |
| D-3 | 0 | 0 | 0 | 0 | 0 | 0 |
| D-4 | 0 | 7335 | 0 | 8388 | 0 | 0 |
| D-5 (Comparative example) | 0 | 0 | 0 | 0 | 3167 | 0 |
| Component (D) / toatl of components (A) and (B) | 13.74 | 15.74 | 6.54 | 14.76 | 5.58 | 11.30 |
| Total of components (C) and (D) / total of components (A) and (B) | 23.42 | 32.12 | 21.63 | 24.53 | 29.50 | 35.37 |
| E-1 | 11.65 | 1.21 | 4.73 | 11.65 | 0 | 3.55 |
| E-2 | 9.18 | 2.96 | 11.60 | 9.18 | 9.12 | 8.70 |
| E-3 | 0 | 0 | 0 | 0 | 3.72 | 0 |
| (Si-H in component (E)) / (alkenyl groups in component (A) (Si-Vi)) (number ratio) | 1.5 | 0.3 | 1.2 | 1.5 | 2.1 | 1.0 |
| F-1 | 0.71 | 0.52 | 0.69 | 0.71 | 0.52 | 0.52 |
| Amount of platinum atoms (ppm) relative to component (A) | 71 | 52 | 69 | 71 | 52 | 52 |
| G-1 | 0.31 | 0.23 | 0.31 | 0.31 | 0.23 | 0.23 |
| Viscosity (Pa·s) | 303 | 232 | 113 | 386 | 98 | Not in grease form |
| BLT (µm) | 38 | 37 | 35 | 39 | 19 | |
| Thermal resistance (mm²·K/W) | 11.0 | 10.3 | 9.6 | 9.9 | 3.8 | |
| BLT (µm) after HC test | 37 | 35 | 34 | 36 | 16 | |
| Thermal resistance (mm²·K/W) after HC test | 10.3 | 10.1 | 9.2 | 9.8 | 13.5 | |

## Claims

1. A thermally conductive silicone composition comprising the components (A), (B), (C), (D), (E), and (F) of:
(A) 100 parts by mass of an organopolysiloxane having at least two alkenyl groups per molecule and having a kinematic viscosity at 25°C of 100 to 500,000 mm²/s;
(B) 50 to 500 parts by mass, based on 100 parts by mass of the component (A), of a hydrolyzable methylpolysiloxane having three functional groups at one end represented by general formula (1) defined as: 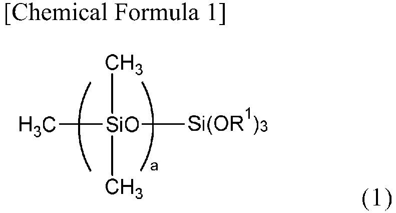 wherein, in the formula (1), R¹ is an alkyl group having 1 to 6 carbon atoms, and a is a number of 5 to 100;
(C) 1000 to 3000 parts by mass, based on the total of 100 parts by mass of the components (A) and (B), of a bismuth tin-based alloy powder having a melting point of 220°C or lower;
(D) 200 to 1500 parts by mass, based on the total of 100 parts by mass of the components (A) and (B), of a heat conductive filler different from the component (C) and having a melting point of 280°C or higher and an average particle diameter of 3 µm or more,
wherein the total amount of the components (C) and (D) is 2300 to 3500 parts by mass based on the total of 100 parts by mass of the components (A) and (B);
(E) an organohydrogenpolysiloxane having at least two hydrogen atoms bonded directly to silicon atoms (Si-H groups) per molecule, the organohydrogenpolysiloxane being contained therein in such an amount that {the number of Si-H groups in the component (E)} / {the number of alkenyl groups in the component (A)} is 0.1 to 5.0; and
(F) a catalyst selected from platinum and platinum compounds in an amount corresponding to 0.1 to 500 ppm of platinum atom based on the mass of the component (A).

2. The thermally conductive silicone composition according to claim 1, further comprising:
(G) 0.1 to 5% by mass, based on the mass of the component (A), of one or two or more compounds selected from the group consisting of acetylene compounds, nitrogen compounds, organophosphorus compounds, oxime compounds, and organochloro compounds.
